# EUROPÄISCHE PATENTANMELDUNG

(11) **EP 1 069 089 A1**
(43) Veröffentlichungstag der Anmeldung: **17.01.2001**
(21) Anmeldenummer: 00113683.7
(22) Anmeldetag: 28.06.2000
(51) Int. Cl.: C04B 18/24, C04B 28/18

(54) **Faserarmierter Porenbeton sowie Verfahren zu seiner Herstellung**

(30) Priorität: 15.07.1999 DE 19933297
(71) Anmelder: Ytong Holding GmbH, 80797 München (DE)
(72) Erfinder: Heinz, Ladislaus, 86368 Gersthofen (DE); Lippe, Klaus Friedrich, 86529 Schrobenhausen (DE)
(74) Vertreter: Patentanwälte Dr. Solf & Zapf

(57) **Zusammenfassung**

Die Erfindung betrifft ein hydrothermalgehärtetes, faserverstärktes Porenbetonprodukt, insbesondere in Form eines geschnittenen Steins, im wesentlichen aufweisend eine Baustoffmatrix aus im wesentlichen Kugelporen umgebenden Feststoffstegen aus Calciumsilikathydratphasen, wobei das Porenbetonprodukt eine Mikrobewehrung in Form kurzer Pflanzenfasern aufweist und wobei die Pflanzenfasern mittels Ultraschall in an sich bekannter Weise aufgeschlossene, elementarisierte Flachsfasern sind und wobei die Flachsfasern nahezu allesamt in vereinzelter Verteilung im Feststoffstegmaterial vollständig eingebettet sind und nicht in den Porenraum der Poren ragen. Die Erfindung betrifft zudem ein Verfahren zur Herstellung des Porenbetonprodukts.

## Beschreibung

Die Erfindung betrifft einen faserverstärkten Porenbeton nach dem Oberbegriff des Anspruchs 1 sowie ein Verfahren zu seiner Herstellung gemäß dem Oberbegriff des Anspruchs 7.

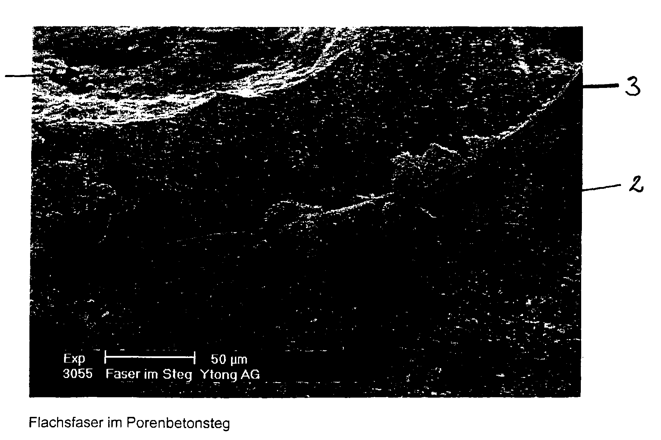

Porenbeton wird im wesentlichen aus einer feinen Quarzsand, Kalk und/oder Zement, Gips und Wasser enthaltenden Bindemittelschlempe, der ein Treibmittel, z.B. Aluminiumpulver zur Erzeugung von Kugelporen zugesetzt wird, hergestellt. Die Schlempe wird in Formen gegossen und treibt dann auf. Währenddessen und danach steift die Schlempe zu einem sogenannten Porenbetonkuchen an, der entformt und in vorbestimmte Formate geschnitten wird. Das geschnittene Zwischenprodukt wird anschließend in einem Autoklaven hydrothermal gehärtet, wodurch durch Calciumsilikathydrat-Phasenbildung die Verfestigung bewirkt wird. Zum Schneiden werden mit Schneiddrähten ausgerüstete Schneidvorrichtungen verwendet. Die Schneiddrähte führen meist oszillierende Bewegungen aus, die die Schneidarbeitsleistung verringern (z.B. DE 34 34 505 C1, Fig. 1).

Bekannt ist aus der DE 44 18 310 A1 die Festigkeit der gehärteten Porenbetonprodukte bei gleichbleibender Rohdichte dadurch zu erhöhen, daß den üblichen Ausgangsmaterialien faserige Zuschlagstoffe zugemischt werden. Dabei soll es sich um bei über 180 °C temparaturbeständige, sogenannte "Hochmodulfasern" einer bestimmten Firma handeln. Diese Fasern bereiten jedoch Probleme beim Schneiden, weshalb vorgeschlagen wird, eine besondere Schneideinrichtung gemäß DE 43 38 295 A1 zu verwenden.

Die in der DE 44 18 310 A1 beschriebenen Produkte sind auf dem Markt nicht aufgetaucht. Es kann unterstellt werden, daß der in dieser Druckschrift gemachte Vorschlag nicht realisierbar ist.

In der WO 92/11217 wird über die Verwendbarkeit von kurzen Fasern über eine sogenannte Mikrobewehrung von faserverstärktem Porenbeton berichtet und festgestellt, daß die meisten bekannten Fasern wegen der Autoklav-Bedingungen unbrauchbar oder zu teuer oder gesundheitsschädigend sind. Verwendbar dagegen sollen Fasern aus dem Polymer Polymethylpenthen sein, weil diese Fasern sich im Autoklav-Prozeß inert verhalten. Unter anderem wird vorgeschlagen, die flexiblen Fasern in einer Länge von 2 bis 10 mm zu verwenden, wenn die Produkte geschnitten werden sollen. Die Fasern sollen sich gut dispergieren lassen und eine zufriedenstellende Bindung zwischen Fasern und Matrixmaterial ergeben. Die Fasern werden in Mengen von 0,5 bis 5 Gew.-% zugesetzt. Gegebenenfalls werden die Fasern bei der Herstellung der Porenbetonmischung vorher in Wasser vordispergiert. Die in dieser Druckschrift beschriebenen Produkte sind ebenfalls noch nicht auf dem Markt zu finden. Offenbar bringt auch in diesem Fall die Faserverstärkung nicht den erwünschten Effekt.

Die in diesem Stand der Technik beschriebenen Fasern weisen in jedem Fall den Nachteil auf, daß durch den Faserzusatz beim Schneiden der Porenbeton-Grünlinge keine ausreichend planen Oberflächen erzielbar sind. Beim Schneiden werden die Fasern ausgefranst oder es werden mit den Fasern Bruchstücke aus der Oberfläche gerissen, woraus unbrauchbare Oberflächenstrukturen resultieren. Porenbetonsteine sollen bekanntlich eine möglichst glatte und ebene Oberfläche aufweisen.

Aus der Beeinträchtigung der Oberfläche beim Schneiden resultiert auch eine derart geringe Festigkeitssteigerung, daß sich der Zusatz der Fasern nicht lohnt. Erkennbar wird dies indiziell z.B. aus Beispiel 3 der WO 92/11217; nach dem Schneiden ist lediglich eine geringe Festigkeitssteigerung feststellbar.

Der gravierendste Nachteil der bekannten Faserzusätze zu Porenbetonmassen ist, daß die möglicherweise eintretende Festigkeitserhöhung unkontrollierbar eintritt. Bei gleicher Zusatzmenge und Qualität der Fasern schwanken die Festigkeitswerte in nicht akzeptabler Weise. Die Schwankungen beinhalten fast keine Festigkeitserhöhung und gehen bis zu erträglichen Festigkeitserhöhungen. In jedem Fall ist aber eine industrielle Produktion mit gleichbleibender vorbestimmbarer Festigkeitssteigerung nicht erzielbar. Auch aus diesem Grund sind auf dem Markt derzeit noch keine faserverstärkten Porenbetone zu finden.

Aufgabe der Erfindung ist, faserverstärkten Porenbeton herzustellen, wobei eine steuerbare Festigkeitssteigerung bei vorgegebenen Rohdichten durch relativ geringe Faserzusatzmengen erzielbar sein soll und die anderen gewünschten Eigenschaften nicht beeinträchtigt werden sollen. Außerdem sollen trotz des Faserzusatzes mittels üblicher Schneidvorrichtungen ausreichend glatte Oberflächen erzeugt werden können.

Diese Aufgabe wird durch die Merkmale des Anspruchs 1 und 7 gelöst. Vorteilhafte Weiterbildungen werden in den von diesen Ansprüchen abhängigen Unteransprüchen gekennzeichnet.

Im Rahmen der Erfindung wurde herausgefunden, daß die Ursache für die bekannten Festigkeitsschwankungen Beeinträchtigungen der Porenstruktur und der Porenform im Porenbetonprodukt durch die Fasern sind. Fasern dringen in die Poren ein, verändern ihre Raumform und unkontrollierbar auch deren Größe. Daraus resultieren nicht nur die unkontrollierbar unterschiedlichen Festigkeiten sondern auch unkontrollierbare Veränderungen anderer gewünschter Eigenschaften wie z.B. Änderungen der Wärmedämmung der Porenbetonprodukte.

Nach der Erfindung werden besondere Fasern von Pflanzenfasern, nämlich elementarisierte Flachsfasern verwendet, die zudem aus einer Vielzahl von Flachsfasersorten ausgewählt sind. Es handelt sich um relativ teuere, ultraschallbehandelte und dadurch elementarisierte Flachsfasern, bei denen die Entfernung der Holzbestandteile und anderer unerwünschter Bestandteile der rohen Pflanzenfasern durch Aufschluß der Pflanzenfasern in einer Ultraschallbehandlung im wässrigen Medium erfolgte. Die Behandlung wird in der Regel mit optimaler Schall-Intensität und unter Ultraschall-Kavitation ausgeführt. Beschrieben werden solche Fasern z.B. in der WO 90/12906. In dieser Druckschrift werden auch zahlreiche Verwendungsbeispieie für diese Fasern genannt. Die Verwendung für die Herstellung von faserverstärktem Porenbeton wird nicht angegeben.

Versuche, die im Rahmen der Erfindung durchgeführt wurden, haben ergeben, daß z.B. nach dem üblichen Röstverfahren aufgeschlossene Flachsfasern die negativen oben beschriebenen Nachteile der andersartigen bekannten Fasern ebenfalls verursachen. Es ist daher überraschend, daß die Verwendung der ultraschallbehandelten Flachsfasern dazu führt, daß sich die Festigkeitssteigerungen kontrollierbar einstellen lassen und die anderen gewünschten Eigenschaften des Porenbetons nicht beeinträchtigt werden. Dies beruht wohl im wesentlichen darauf, daß die ultraschallbehandelten Flachsfasern durch die Ultraschallbehandlung eine Affinität zu einem oder mehreren Rohstoffen der Porenbetonmischung erhalten, die bewirkt, daß sich die Fasern ausschließlich in das Feststoff-Matrixmaterial, dem sogenannten Stegmaterial einbetten und nicht in den Poren oder die Porenhüllen eindringen. Porenform und die Porenstruktur, d.h. die Porengröße und die Porenverteilung und damit die Gesamt-Matrixstruktur bleiben unverändert, so daß somit auch die davon abhängigen Eigenschaften des Porenbetons erhalten bleiben. Wesentlich ist, daß nunmehr mit steigender Faserlänge und/oder steigender Faserzusatzmenge korrelativ die Festigkeit insbesondere die Biegezug-Festigkeit kontrolliert gesteigert werden kann, so daß die industrielle Produktion Porenbeton-Produkte zur Verfügung stellen kann, die hinsichtlich ihrer Qualität gleichbleibend differenzierbar sind.

Erfindungsgemäß werden insbesondere sogenannte Exakt-Schnittfasern verwendet. Das sind Fasern, die nach speziellen Verfahren auf eine genau vorgegebenene Länge geschnitten wurden. Dabei wird ein Faserstrang hergestellt und von diesem dann die Fasern in gewünschter Länge abgeschnitten. Verwendbar sind auch Kurzfasern, die mit der Schneidmühle hergestellt werden. Diese haben eine breitere Längenverteilung mit hohem Anteil zu kurzer Fasern. Auch mit diesen erhält man eine Verstärkung, nur muß man mehr davon einsetzen.

Die Flachsfasern können erfindungsgemäß in einer Länge zwischen 0,01 und 1,5, insbesondere zwischen 0,3 und 0,8 mm verwendet werden. Die Zusatzmengen betragen 0,25 bis 1,0, insbesondere 0,4 bis 0,8 Gew.-% bezogen auf die Trockenstoffeinwaage.

Vorteilhaft ist, feuchte Fasern mit einem Feuchtegehalt bis zu etwa 50 %, insbesondere von 8 bis 15 % Wassergehalt zu verwenden. Zweckmäßig ist auch, einen wässrigen dünnflüssigen Faserbrei herzustellen, in dem die Fasern vereinzelt und homogen verteilt dispergiert sind, und diesen Faserbrei mit dem Quarzsand und/oder mit sogenanntem Rückgut, das ist z.B. Material, das bei der Formgebung des Porenbetonkuchens anfällt, im Porenbeton-Mischer mit weiterem Wasserzusatz weitergehend vorzudispergieren und anschließend erst die anderen üblicherweise verwendeten Rohstoffe wie Kalk, Zement, Gips, Aluminium-Pulver oder dergleichen zuzusetzen.

Die angesteiften faserverstärkten Porenbetonkuchen lassen sich besonders gut mit Vorrichtungen schneiden, die mit oszillierenden Drähten arbeiten, woraus glatte ebene Oberflächen ohne Ausfransungen und Ausbrüche resultieren.

Überraschend ist, daß durch die ausgewählten Fasern z.B. eine Erhöhung der Biegezugfestigkeit bei geschnittenen Produkten bis zu etwa 40 % erreichbar ist.

Das folgende Beispiel soll die Erfindung verdeutlichen.

In einer üblichen Porenbeton-Rezeptur für die Rohdichteklasse P4/0,6 wurden jeweils 0,5 Masse-% ultraschallbehandelte Flachsfasern bezogen auf die Feststoffeinwaage zugegeben. Die Fasern wurden vor der Zugabe in den Porenbeton-Mischer in Wasser bis zur weitestgehenden Vereinzelung vordispergiert. Zum Vergleich wurde eine Mischung ohne Fasern hergestellt. Die Mischungen wurden in üblicher Weise vergossen nach dem Ansteifen geschnitten und autoklaviert. Danach wurde die Biegezugfestigkeit bestimmt.

Als Fasern wurden mit Ultraschall aufgeschlossene, verschieden lange Flachsfasern (FF1, FF2) und durch Röstung aufgeschlossene Flachsfasern (FF3) verwendet. Die Faserlängen ergeben sich aus der Tafel 1.

| Tafel 1: | | | |
|---|---|---|---|
| Faserlänge (mm) | 0,01 bis 0,09 | 0,1 bis 0,9 | 1,0 bis 2,0 |
| FF1 | 45 | 55 | - |
| FF2 | 35 | 58 | 7 |
| FF3 | 45 | 55 | - |

Das Ergebnis ist in Tafel 2 festgehalten.

| Tafel 2: | | | | | | | | | |
|---|---|---|---|---|---|---|---|---|---|
| Versuch | Biegezugfestigkeit (N/mm²) / Rohdichte (g/cm³) | | | | | | | B-Zahl | Festigkeitssteigerung |
| | | | | | | | | | |

| | 1 | 2 | 3 | 4 | 5 | 6 | MW | | (%) |
|---|---|---|---|---|---|---|---|---|---|
| Nullgießung | 0,630 | 0,790 | 0,740 | 0,780 | 0,720 | 0,760 | 0,740 | 165 | - |
| | 0,530 | 0,530 | 0,540 | 0,530 | 0,530 | 0,530 | 0,530 | | |
| FF1 | 1,040 | 0,980 | 1,020 | 0,990 | 1,000 | 1,160 | 1,030 | 205 | 24 |
| | 0,560 | 0,560 | 0,550 | 0,560 | 0,560 | 0,560 | 0,560 | | |
| FF2 | 1,150 | 1,240 | 0,980 | 1,070 | 1,110 | 1,260 | 1,140 | 236 | 43 |
| | 0,550 | 0,550 | 0,550 | 0,550 | 0,550 | 0,550 | 0,550 | | |
| FF3 | 0,730 | 0,540 | 0,690 | 0,780 | 0,820 | 0,700 | 0,710 | 147 | -11 |
| | 0,550 | 0,550 | 0,550 | 0,550 | 0,550 | 0,540 | 0,550 | | |

Die ultraschallbehandelten Fasern erzeugen - wie sich aus Tafel 2 ergibt - einen deutlichen Anstieg der Biegezugfestigkeit, wobei mit einer größeren Faserlänge (FF2) sehr viel höhere Festigkeiten erzielbar sind. Die Zunahme der Faserlänge führt fast zu einer Verdoppelung der Biegezugfestigkeit. Bei der Biegezugprüfung am ganzen Stein konnte beim Einsatz der Röstflachsfasern ein deutlicher Rückgang der Biegezugfestigkeit festgestellt werden. Die Untersuchung der Phasenausbildung der Porenbetonprodukte ergab, daß die Menge und der Kristallisationsgrad der Calciumsilikathydratphasen-Neubildungen gleich sind und dies somit keine Ursache für die Erhöhung bzw. den Rückgang der Biegezugfestigkeit sein kann.

Das beigefügte Bild verdeutlicht die Matrixstruktur des erfindungsgemäßen Porenbetons. Erkennbar ist ein Teil einer Kugelpore 1 sowie das Feststoffstegmaterial 2, das die Kugelpore 1 umgibt. Im Stegmaterial 2 ist die vereinzelte ultraschallbehandelte Flachsfaser 3 vollständig eingebettet, ohne die Kubelpore zu tangieren oder in sie einzudringen. Zudem ist erkennbar, daß das Feststoffstegmaterial sich teilbereichsweise an die Faseroberfläche angeheftet hat, woraus wohl die besonders hohe Steigerung der Festigkeiten resultiert. Diese vollständige Einbettung der Fasern in das Stegmaterial bedingt wohl auch die gute Schneidbarkeit der grünen Porenbetonkörper; denn die Fasern werden durch diese haftende Einbettung beim Schneiden festgehalten und abgestützt, so daß eine Ausfransung und/oder ein Materialausbruch verhindert werden. Dabei sei angemerkt, daß durch den Schnitt bedingt an der Schnittoberfläche gegebenenfalls Faserreststücke einzelner Fasern frei von der Oberfläche abstehen und die Oberfläche überragen können.

## Patentansprüche

1. Hydrothermalgehärtetes, faserverstärktes Porenbetonprodukt, insbesondere in Form eines geschnittenen Steins, im wesentlichen aufweisend eine Baustoffmatrix aus im wesentlichen Kugelporen umgebenden Feststoffstegen aus Calciumsilikathydratphasen,
**dadurch gekennzeichnet,** daß
a) das Porenbetonprodukt eine Mikrobewehrung in Form kurzer Pflanzenfasern aufweist;
b) die Pflanzenfasern mittels Ultraschall in an sich bekannter Weise aufgeschlossene, elementarisierte Flachsfasern sind;
c) die Flachsfasern nahezu allesamt in vereinzelter Verteilung im Feststoffstegmaterial vollständig eingebettet sind und nicht in den Porenraum der Poren ragen.

2. Porenbetonprodukt nach Anspruch 1,
**dadurch gekennzeichnet,** daß
Feststoffstegmaterial an der Oberfläche der einzelnen Fasern haftet.

3. Porenbetonprodukt nach Anspruch 1 und/oder 2,
**dadurch gekennzeichnet,** daß
die Flachsfasern eine Länge von 0,01 bis 1,5, insbesondere von 0,3 bis 0,8 mm aufweisen.

4. Porenbetonprodukt nach einem oder mehreren der Ansprüche 1 bis 3,
**dadurch gekennzeichnet,** daß
die Flachsfasern eine Dicke von 10 bis 20, insbesondere von 10 bis 15 µm aufweisen.

5. Porenbetonprodukt nach einem oder mehreren der Ansprüche 1 bis 4,
**dadurch gekennzeichnet,** daß
Flachsfasern in einer Menge von 0,25 bis 1,0, insbesondere von 0,4 bis 0,8 Gew.-% enthalten sind.

6. Porenbetonprodukt nach einem oder mehreren der Ansprüche 1 bis 5,
**dadurch gekennzeichnet,** daß
die Flachsfasern mittels Exakt-Schnitt hergestellte Flachsfasern sind.

7. Verfahren zur Herstellung eines faserverstärkten Porenbetonprodukts, insbesondere eines Porenbetonprodukts nach einem oder mehreren der Ansprüche 1 bis 5,
**dadurch gekennzeichnet,** daß
einer üblichen Porenbetonmischung, die zumindest Quarzsand und/oder Quarzmehl, ein Bindemittel wie Kalk und/oder Zement, gegebenenfalls Gips sowie ein Treibmittel, z.B. Aluminiumpulver, und Wasser enthält, zur Mikrobewehrung mittels Ultraschall aufgeschlossene Flachsfasern zugesetzt werden.

8. Verfahren nach Anspruch 7,
**dadurch gekennzeichnet,** daß
Flachsfasern einer Länge von 0,01 bis 1,5, insbesondere 0,3 bis 0,8 mm zugesetzt werden.

9. Verfahren nach Anspruch 7 und/oder 8,
**dadurch gekennzeichnet,** daß
Flachsfasern einer Dicke von 10 bis 20, insbesondere von 10 bis 15 µm zugesetzt werden.

10. Verfahren nach einem oder mehreren der Ansprüche 7 bis 9,
**dadurch gekennzeichnet,** daß
die Flachsfasern in einer Menge von 0,25 bis 1,0, insbesondere von 0,4 bis 0,8 Gew.-% bezogen auf den Feststoffgehalt der Mischung zugesetzt werden.

11. Verfahren nach einem oder mehreren der Ansprüche 7 bis 10,
**dadurch gekennzeichnet,** daß
feuchte Flachsfasern mit H₂O-Gehalten von 8 bis 15 % verwendet werden.

12. Verfahren nach einem oder mehreren der Ansprüche 7 bis 11,
**dadurch gekennzeichnet,** daß
ein vorher hergestellter Faserbrei verwendet wird, der die Flachsfasern vereinzelt und homogen verteilt aufweist.

13. Verfahren nach einem oder mehreren der Ansprüche 7 bis 12,
**dadurch gekennzeichnet,** daß
die Flachsfasern im Anmachwasser der Porenbetonmischung zusammen mit dem Quarzsand und/oder Quarzmehl und/oder Rückgut vordispergiert und anschließend erst die anderen Komponenten der Porenbetonmischung zugegeben werden.

14. Verfahren nach einem oder mehreren der Ansprüche 7 bis 13,
**dadurch gekennzeichnet,** daß
zur gesteuerten Festigkeitseinstellung einer bestimmten Mischung Flachsfasern in gleicher Menge, jedoch jeweils mit vorbestimmter unterschiedlicher Lange zugegeben werden.

15. Verfahren nach einem oder mehreren der Ansprüche 7 bis 14,
**dadurch gekennzeichnet,** daß
zur gesteuerten Festigkeitseinstellung einer bestimmten Mischung Flachsfasern mit gleicher Lange, jedoch in jeweils vorbestimmten unterschiedlichen Mengen zugegeben werden.

16. Verfahren nach einem oder mehreren der Ansprüche 7 bis 15,
**dadurch gekennzeichnet,** daß
mittels Exakt-Schnitt hergestellte Flachsfasern verwendet werden.

17. Verfahren nach einem oder mehreren der Ansprüche 7 bis 16,
**dadurch gekennzeichnet,** daß
das angesteifte grüne Porenbetonprodukt mit oszillierenden Drähten einer Schneidvorrichtung geschnitten wird.
